# EUROPEAN PATENT APPLICATION

(11) **EP 2 418 042 A1**
(43) Date of publication of application: **15.02.2012**
(21) Application number: 11151112.7
(22) Date of filing: 17.01.2011
(51) Int. Cl.: B23K 35/02, B23K 35/28, B23K 35/38, B32B 15/01, C22C 21/02, C22C 21/10

(54) **Aluminium brazing sheet material for tubes**

(71) Applicant: Aleris Aluminum Koblenz GmbH, 56070 Koblenz (DE)
(72) Inventor: Wittebrood, Adrianus, 1991 HB Velserbroek (NL)
(74) Representative: Müller, Frank Peter

(57) **Abstract**

This invention relates to a brazing sheet material comprising of an aluminium core alloy layer bonded on one side with an aluminium brazing clad layer and bonded on the other side with a waterside liner, and wherein the waterside liner is being made of an aluminium alloy having a corrosion potential lower than that of said aluminium core alloy, and the waterside liner is from an aluminium alloy comprising of, in wt.%, Zn 0.8 to 3, Mg 0.2 to 1.25, Mn < 0.9, Cu < 0.3, optionally one or more elements selected from the group (Zr , Cr, V, Ti), Fe < 0.6, Si < 0.5, unavoidable impurities and balance aluminium.

## Description

### FIELD OF THE INVENTION

The invention relates to a brazing sheet material suitable for manufacturing tubes of a heat exchanger device, e.g. folded tubes, and comprising of an aluminium core alloy layer bonded on one side with an aluminium brazing clad layer and bonded on the other side with a waterside liner made of an aluminium alloy having a corrosion potential lower than that of said aluminium core alloy.

### BACKGROUND TO THE INVENTION

As will be appreciated herein below, except as otherwise indicated, aluminium alloy designations and temper designations refer to the Aluminum Association designations in Aluminum Standards and Data and the Registration Records, as published by the Aluminum Association in 2010 and are well known to the person skilled in the art.

For any description of alloy compositions or preferred alloy compositions, all references to percentages are by weight percent unless otherwise indicated.

Brazing sheet products find wide applications in heat exchangers and other similar equipment. Conventional brazing sheet products have a core of, typically, but not exclusively an aluminium alloy of the 3xxx-series, having on at least one surface of the core sheet a brazing material in the form of an aluminium clad brazing layer (also known as an aluminium cladding layer). The aluminium clad layer is made of a 4xxx-series alloy comprising silicon in an amount in the range of 4% to 20% by weight, and preferably in the range of about 7% to 14% by weight. The aluminium clad layer may be coupled or bonded to the core alloy in various ways known in the art, for example by means of roll bonding, cladding spray-forming or semi-continuous or continuous casting processes. These aluminium clad layers have a liquidus temperature typically in the range of about 540°C to 615°C.

Heat exchangers such as condensers, evaporators and the like for use in car coolers, air conditioning systems, industrial cooling systems, etc. usually comprise a number of heat exchange tubes arranged in parallel between two headers, each tube joined at either end to one of the headers. Corrugated fins are disposed in an airflow clearance between adjacent heat exchange tubes and are brazed to the respective tubes.

The tubes or refrigerant tubes are being manufactured for example by folding a brazing sheet clad on the outside with a brazing material layer. The headers, tubes and fins are then assembled and heated to the brazing temperature and for a period long enough for the brazing clad layer to melt and to spread and joining together the fins, tubes and headers into a brazed assembly.

The inner-surface of the tube, thus the part that is exposed to the coolant, has to be corrosion resistant. Depending on the heat exchanger apparatus and the coolant used, there can also be a requirement for sufficient erosion-corrosion resistance. Erosion resistance is an important parameter in view of the erosion due to the flowing medium or coolant in the tubes, in particular when also non-intentionally added non-soluble particles are present in the coolant. These non-soluble particles may create an undesired abrasive effect on the inner-surface of the tube material. The source of the non-soluble particles can be due to improper coolant maintenance. This means that loss coolant is being replaced by a fluid contaminated with possible abrasive particles (e.g. sand particles). Another source for abrasive particles is the formation of insoluble corrosion products during the life time exposure of the heat exchanger apparatus.

The required erosion-corrosion resistance is commonly achieved by applying a waterside liner onto the brazing sheet material, which waterside liner forms the inner-surface of the heat exchange tube and being the outermost layer of the brazing sheet, directly in contact with the coolant. The layer which will be directed towards the coolant side of a heat exchanger manufactured from the brazing sheet material is the coolant side cladding and is hereinafter also referred to as the waterside cladding or waterside liner. The most widely applied waterside-liner material used when manufacturing heat exchange tubes is the AA7072-series alloy. The known AA7072 alloy has a registered alloy composition of, in wt.%:

| | |
|---|---|
| Zn | 0.8 to 1.3 |
| Si+Fe | less than 0.7 |
| Cu | less than 0.10 |
| Mn | less than 0.10 |
| Mg | less than 0.10, |

impurities and other elements, each <0.05%, total <0.15, and the balance being made by aluminium.

However, there is a demand for a brazing sheet product having a waterside liner with a good corrosion resistance and with an increased erosion resistance.

### DESCRIPTION OF THE INVENTION

It is an object of the invention to provide a brazing sheet product having a waterside liner with increased erosion resistance.

It is another object of the invention to provide a brazing sheet product having waterside liner having good corrosion resistance and with increased erosion resistance.

These and other objects and further advantages are met or exceeded by the present invention providing a brazing sheet material comprising of an aluminium core alloy layer bonded on one side with an aluminium brazing clad layer and bonded on the other side with a waterside liner, and wherein the waterside liner is being made of an aluminium alloy having a corrosion potential lower than that of said aluminium core alloy, and the waterside liner is from an aluminium alloy comprising of, in wt.%,

| | |
|---|---|
| Zn | 0.8 to 3 |
| Mg | 0.2 to 1.25 |
| Mn | less than 0.9 |
| Cu | less than 0.3, |
| optionally one or more elements selected from the group consisting of (Zr 0.05 to 0.3, Cr 0.05 to 0.3, V 0.05 to 0.3, Ti 0.01 to 0.4), | |
| Fe | less than 0.6 |
| Si | less than 0.5, |

other elements and unavoidable impurities and balance aluminium.

This achieves the effect of obtaining an increased erosion resistance of the waterside liner material, in particular in the post-braze condition. This renders the brazing sheet material ideally suitable for producing tubes, including multi-port folded tubes, of a heat exchanger device.

As essential alloying element Zn is added to the waterside liner in order to make the corrosion potential of the cladding layer low in comparison to that of the core layer. The potential difference is at least 30 mV, and typically of at least 90 mV when measured in accordance with ASTM G69. In that case, when the Cu content in the waterside liner is less than 0.3%, and with preferred lower ranges, a sufficient sacrificial anode effect can be achieved and the corrosion resistance can be maintained. The Zn content should be therefore in the range of about 0.8% to 3%. A preferred upper-limit for the Zn-content is about 2.5%, and more preferably about 2.3%. A preferred lower-limit for the Zn-content is about 1%, preferably of at least about 1.5%, and more preferably of at least about 1.7%.

The addition of Mg in a range of 0.2% to 1.25% and in combination with the Zn in the defined ranges provides for maintaining the corrosion resistance at the desired level, but simultaneously increasing the erosion resistance by providing increased hardness and strength levels. The increased hardness and strength levels is in particular achieved in the post-braze condition. In a preferred embodiment the Mg-content is at least about 0.45%, and preferably at least about 0.7%. In a preferred embodiment the upper-limit for the Mg-content is about 1.10%.

The Mn content in the waterside liner material can be up to about 0.9%, and preferably is less than 0.7%. It has been found that in the material according to this invention there is no positive effect of Mn addition to the hardness or strength of the material, and may even adversely affect the hardness and tensile properties at too high levels. For that reason no purposive addition is Mn is required for the intended purpose of the liner material. In a preferred embodiment the Mn content is less than about 0.4%, and more preferably less than 0.2%.

The Cu content in the waterside liner material can be up to about 0.3%. As it may have an adverse effect on the corrosion performance of the liner material it is preferably less than about 0.10%, and more preferably it is less than 0.03%. A too high Cu content may also lead to the formation of low-melting phases adverse affecting the brazing capability of the brazing sheet material. More preferably the alloy is essentially free or substantially free from Cu. With "substantially free" or "essentially free" we mean that no purposeful addition of this element was made to the composition, but that due to impurities and/or leaching from contact with manufacturing equipment, trace quantities of this element may, nevertheless, find their way into the final alloy product.

The waterside liner material may further comprises one or more elements selected from the group consisting of about 0.05% to 0.3% Zr, and about 0.05% to 0.3% Cr as purposive alloying elements for grain structure control of the microstructure in the sheet product. On a less preferred basis also about 0.05% to 0.3% of V could be used. Alloying elements like Zr will retard recrystallisation. A partially or fully recovered microstructure will be significantly stronger, in particular in terms of tensile yield strength and hardness, than a fully-recrystallised (annealed) microstructure.

Ti can be added to the alloy product amongst others for grain refiner purposes during casting of the alloy stock, e.g. ingots or billets, and it also increases the corrosion resistance of the waterside liner. The addition of Ti should not exceed about 0.4%, and preferably it should not exceed about 0.3%. A preferred lower limit for the Ti addition is about 0.01 %. Ti can be added as a sole element or with either boron or carbon serving as a casting aid for grain size control.

The amount of Fe present in waterside liner material depends primarily on the origin of the alloy material and can be up to about 0.6%, and preferably is not more than about 0.4%.

The amount of Si present in waterside liner material depends primarily on the origin of the alloy material and can be up to about 0.5%, and preferably is not more than about 0.4%. The Si may form Mg₂Si precipitates with the Mg present in the waterside liner material and thereby increase the hardness of the liner material. The preferred lower-limit for the Si is about 0.1 %.

The balance in the waterside liner material is made by aluminium and normal and/or inevitable incidental elements and impurities. Typically such elements or impurities are present at a level of each 0.05% maximum and a total of 0.2% maximum.

In one embodiment of the invention, the brazing sheet incorporates a non-homogenized waterside liner.

In accordance with the invention it has been found that the aluminium alloy used for the waterside liner shows a significant favourable age-hardening effect after exposure to a brazing cycle. A natural ageing effect occurs after being exposed to a brazing cycle. Also an artificial ageing effect occurs after being exposed to a brazing cycle. Due to the ageing effect significant strength and hardness improvements are achieved shortly after the brazing cycle and even during the life time of the heat exchanger. An increased hardness is also associated with an increased erosion resistance of the waterside liner.

In order to take full benefit of the artificial age hardening effect a brazed heat exchanger can be subjected to an artificial ageing treatment to increase the relevant properties of the materials used. In addition, or if no purposive artificial ageing treatment is carried out on the brazed heat exchanger, the favourable artificial ageing effect still occurs due to the heat treatment encountered during the life time cycle of the heat exchanger.

In an embodiment of the invention the brazing sheet material has a waterside liner with a post-braze hardness of greater than 50 Hv, preferably of greater than 60 Hv, and more preferably of greater than 65 Hv. In the best examples a hardness of more than 80 Hv has been obtained.

In an embodiment of the invention the brazing sheet material has a waterside liner with a post-braze tensile yield strength (TYS) of greater than 110 MPa, preferably of greater than 130 MPa, and more preferably of greater than 140 MPa.

In an embodiment of the invention the brazing sheet material is provided with an aluminium brazing clad liner of the 4xxx-series and preferably having a Si content of about 7% to 14%.

In an embodiment the aluminium brazing clad liner further contains one or more wetting elements. Preferably the wetting elements are selected from the group consisting of Bi, Pb, Li, Sb, Se, Y, and Th, and wherein the total amount of the wetting element(s) is in a range of about 0.01% to 0.5%. In a preferred embodiment the element Bi is selected from this group of wetting elements and is in a range of about 0.01% to 0.5%, and preferably in a range of about 0.04% to 0.3%, as being the most efficient wetting element for this purpose in this alloy system during a brazing operation.

In an embodiment, in particular where the brazing sheet material according to this invention is applied in a CAB operation without the use of a brazing flux, Mg is being added and controlled in a range of 0.02% to about 1%, and more preferably the upper limit is about 0.5%, and more preferably about 0.25%. A more preferred lower-limit for the Mg content is 0.06%.

In the embodiment that Bi is added to the brazing material layer it is further preferred that excess Mg content with respect to stoichiometric composition of Bi₂Mg₃ is 0.07% or less. It has been found that Bi has a low solubility in aluminium and tends to separate out at the grain boundaries even when added at low levels of for example about 0.1%. To overcome this problem a small amount of Mg will form Bi₂Mg₃ which stops separation at the grain boundaries. This Bi₂Mg₃ phase will, however, dissolve in the brazing clad layer material at melting of the brazing material releasing the Bi to lower the surface tension of the molten filler.

The amount of Fe present in the Al-Si alloy brazing material depends primarily on the origin of the alloy material and can be up to about 0.8%, and preferably is not more than about 0.6%. As grain refiner element Ti can be present in the brazing material in a range of up to about 0.2%, preferably up to 0.15%. The balance is made by unavoidable impurities (typically such elements or impurities are present at a level of each 0.05% maximum and a total of 0.2% maximum) and aluminium. Also Cu can be present as a tolerable impurity element, typically to a level of up to 0.3%, but preferably does not exceed 0.1 %. Also Zn can be present as a tolerable impurity element, typically to a level of up to 0.4%.

As is known in the art the aluminium brazing clad liner can be made of a single layer or it can be made from two layers that melt during the brazing operation and in the molten condition of both layers forming the chemical composition of the filler alloy as herein defined.

In the brazing sheet material according to the invention the core alloy layer is made for an aluminium alloy. The aluminium core alloys are preferably from the 2xxx-, 3xxx-, 5xxx-, 6xxx-, or 7xxx-series aluminium alloys, for example an AA3003, AA3004, AA3005, AA6060 or AA6063-type alloy.

For those aluminium core alloys that comprise a substantial amount of Si, e.g. of 0.15% or more, during the brazing operation some Mg from the waterside liner may diffuse into the core alloy. In the diffusion zone a 6xxx type alloy will be formed that may contribute of the overall strength of the material.

In an embodiment the brazing sheet material comprising of an aluminium core alloy layer bonded on one side with an aluminium brazing clad layer and bonded on the other side with a waterside liner, and wherein the waterside liner is being made of an aluminium alloy having a potential lower than that of said aluminium core alloy, and the waterside liner is from an aluminium alloy consisting of, in wt.%,

| | |
|---|---|
| Zn | 0.3 to 3, and preferably 1.5 to 2.5, |
| Mg | 0.2 to 1.25, and preferably 0.45 to 1.10, |
| Mn | less than 0.4, preferably less than 0.2, |
| Cu | less than 0.1, preferably less than 0.03, |
| optionally one or more elements selected from the group consisting of (Zr 0.05 to 0.3, Cr 0.05 to 0.3, Ti 0.01 to 0.4), | |
| Fe | less than 0.6 |
| Si | less than 0.5, |

other elements and unavoidable impurities, each maximum 0.05, total 0.2, and balance aluminium,
and wherein the aluminium brazing clad liner comprises of, in wt.%:

| | |
|---|---|
| Si | 7 to 14 |
| Mg | 0.02 to 0.5, preferably 0.06 to 0.2, |
| Bi | 0.01 to 0.5, preferably 0.04 to 0.3, |
| Fe | less than 0.8 |
| Zn | less than 0.4 |
| Ti | less than 0.2, |

other elements and unavoidable impurities, each maximum 0.05, total 0.2, and balance aluminium.

This brazing sheet system of brazing clad liner and waterside liner allows for the use of relatively high Mg contents in the waterside liner to favourably increase the erosion resistance in the post-braze condition, as it can be brazed in a controlled atmosphere brazing process (CAB) without the use of brazing flux material. It is considered to be known in the art that a too high Mg content in the brazing filler alloy and/or in the waterside liner results in an undesirable interaction with any oxygen in the controlled inert gas atmosphere during CAB brazing and disrupts the formation of a smooth and acceptable fillet. This brazing sheet system allows for the production of brazed tubes having improved erosion resistance (due to in particular increase Zn and Mg levels) when brazed in a fluxless CAB process.

The brazing sheet material according to the invention has a typical thickness at final gauge in the range of about 0.05 mm to 4 mm. The brazing sheet material is preferably up to about 350 microns thick at final gauge, and more preferably in a range of about 100 microns to 260 microns thick, e.g. 240 microns.

The brazing clad material layer has preferably a thickness which is about 3% to 15% of the entire thickness of aluminium alloy brazing sheet material, e.g. 10%.

The waterside liner layer has preferably a thickness which is about 3% to 15% of the entire thickness of aluminium alloy brazing sheet material, e.g. 5% or 7%. The thickness of the waterside liner is preferably less than 30 microns, and more preferably less than 20 microns.

In another aspect of the invention there is provided a method of manufacturing an article, a heat exchanger, joined by brazing or an assembly of brazed components, comprising the steps of:
(a) providing or forming the components to be brazed together of which at least one is made from an aluminium brazing sheet material according to this invention;
(b) assembling the components into an assembly, and wherein preferably the waterside liner material of the brazing sheet material is being kept inside the assembly formed by the brazing sheet material to constitute a hollow structure, preferably forming the inner-surface of a tube;
(c) brazing the assembly, preferably without applying brazing flux on the assembly of components, and brazing the whole assembly in an inert gas atmosphere at a brazing temperature, typically at a temperature in a range of about 540°C to 615°C, e.g. about 600°C, for a period long enough for melting and spreading of the aluminium brazing clad layer material, e.g. a dwell time of 2 to 5 minutes, typically at around 2 or 3 minutes; typically the oxygen content in the brazing atmosphere should be as low as reasonable possible, and is preferably below about 1000 ppm, and more preferably below about 200 ppm;
(d) cooling of the brazed assembly, typically to below about 100°C, e.g. to ambient temperature.

In a further embodiment of the method, the cooled and brazed assembly, e.g. a heat exchanger, is being subjected to an artificial ageing treatment. Such an artificial ageing treatment can be carried out as a purposive heat treatment for a defined period of time at a defined elevated temperature (e.g. at about 180°C or about 230°C). Alternatively, or in addition thereto, the brazed assembly is heat treated during the life time cycle of the brazed assembly, e.g. an automotive heat exchanger or as an industrial heat exchanger, as a consequence of the heated coolant medium flowing through the assembly when in operation. With the artificial ageing treatment optimum properties are achieved for the waterside liner material with regard to corrosion-erosion resistance.

A further aspect of the invention is that it relates to the use of an aluminium alloy consisting of, in wt.%,

| | |
|---|---|
| Zn | 0.3 to 3, and preferably 1.5 to 2.5, |
| Mg | 0.2 to 1.25, and preferably 0.45 to 1.10, |
| Mn | less than 0.9, preferably less than 0.4, |
| Cu | less than 0.1, preferably less than 0.03, |
| optionally one or more elements selected from the group consisting of (Zr 0.05 to 0.3, Cr 0.05 to 0.3, Ti 0.01 to 0.4), | |
| Fe | less than 0.6 |
| Si | less than 0.5, |

other elements and unavoidable impurities, each maximum 0.05, total 0.2, and balance aluminium,
as a waterside liner (coolant side) in a brazed tube made from brazing sheet material, in particular a brazed folded tube, wherein the tube (single-port or multi-port folded tube) is preferably brazed by means of a controlled atmosphere brazing process devoid of the application of any brazing flux material (e.g. as in commonly applied in the well-known Nocolok®-brazing process), thus in a fluxless CAB process.

In the following, the invention will be explained by the following non-limitative example.

### EXAMPLE

### Example 1.

In a series of casts 5 waterside liner material have been produced having a chemical composition as listed in Table 1, and wherein the balance is being made by unavoidable impurities and aluminium.

In this series of alloys Alloy no. 1 and 2 are alloys showing the principle of this invention, and whereby Alloy no. 3 to 5 are comparative alloys. Alloy no. 5 is an aluminium alloy within the range of known AA7072-series alloy with the purposive addition of 0.1% Ti.

**Table 1. Chemical composition of the aluminium alloys tested, in wt.%.**

| **Alloy no.** | **Element** | | | | | |
|---|---|---|---|---|---|---|
| | **Mn** | **Zn** | **Mg** | **Fe** | **Si** | **Ti** |
| **1** | 0.51 | 1.02 | 0.5 | 0.32 | 0.36 | 0.23 |
| **2** | 0.50 | 1.99 | 1.04 | 0.32 | 0.38 | 0.23 |
| **3** | 1.04 | 0.99 | 1.03 | 0.31 | 0.37 | 0.24 |
| **4** | 1.03 | 1.99 | 0.52 | 0.31 | 0.37 | 0.25 |
| **5** | <0.01 | 1.98 | <0.01 | 0.31 | 0.36 | 0.1 |

Of each alloy one ingot has been homogenised and one ingot has not been homogenised. The homogenisation was by soaking for 12 hours at 580°C. All ingots, both homogenised and non-homogenised, have been pre-heated to 490°C and then hot rolled to 2 mm. The 2 mm material was subsequently cold rolled to 0.3 mm and followed by an annealing for 3 hours at 350°C. The annealed sheet materials were given a simulated brazing cycle of 3 minutes at 600°C. Part of the sheet material of each alloy was then 10 days natural aged for 10 days at room temperature and then tested for its hardness and tensile properties; "TYS" stands for Tensile Yield Strength, "UTS" stands for Ultimate Tensile Strength, and "El." stands for Elongation at fracture. Another part of the sheet material was artificially aged for 250 hours at 250°C and then tested for its hardness (Hardness Vickers, N=5, load 200 gr., d=0.25mm, 15 seconds) and tensile properties in accordance with ASTM B557.

The hardness and tensile properties after 10 days natural ageing and after artificial ageing are listed in Tables 2 and 3 respectively for both the homogenized and non-homogenized material.

**Table 2. Hardness and tensile date after 10 days natural ageing.**

| **Alloy no.** | **Non-homogenised** | | | | **Homogenised** | | | |
|---|---|---|---|---|---|---|---|---|
| | **Hv** | **TYS (MPa)** | **UTS (MPa)** | **EI. (%)** | **Hv** | **TYS (MPa)** | **UTS (MPa)** | **EI. (%)** |
| **1** | 44 | 69 | 162 | 12.3 | 42 | 60 | 158 | 16.8 |
| **2** | 56 | 90 | 206 | 14.0 | 57 | 92 | 208 | 16.7 |
| **3** | 51 | 74 | 187 | 16.7 | 49 | 69 | 180 | 15.9 |
| **4** | 46 | 69 | 169 | 12.7 | 43 | 62 | 157 | 17.0 |
| **5** | 28 | 36 | 105 | 15.9 | 27 | 39 | 96 | 14.9 |

**Table 3. Hardness and tensile date after ageing for 250 hours at 250°C.**

| **Alloy no.** | **Non-homogenised** | | | | **Homogenised** | | | |
|---|---|---|---|---|---|---|---|---|
| | **Hv** | **TYS (MPa)** | **UTS (MPa)** | **EI. (%)** | **Hv** | **TYS (MPa)** | **UTS (MPa)** | **EI. (%)** |
| **1** | 75 | 182 | 232 | 6.5 | 78 | 183 | 233 | 91. |
| **2** | 82 | 181 | 249 | 9.2 | 89 | 212 | 271 | 8.6 |
| **3** | 58 | 93 | 196 | 11 | 66 | 128 | 209 | 8.9 |
| **4** | 56 | 95 | 180 | 9.2 | 56 | 95 | 175 | 13.7 |
| **5** | 27 | 36 | 108 | 19.4 | 27 | 35 | 97 | 15.5 |

From the results of Tables 2 and 3 it can be seen that the known 7072 (alloy no. 5) does not show any age-hardening response in the post-braze condition, irrespective whether the material has been homogenised or not.

From the comparison of Alloys no. 1 to 4 against alloy no. 5 it can be seen that the purposive addition of Mg at levels of more than 0.2% (0.1% being the upper-limit of Mg for the registered AA7072 alloy) leads to an age-hardening response in the post-braze condition.

From a comparison of Alloys no. 1 and 2 against comparative alloys no. 3 and 4 it can be seen that the purposive addition of Mn has an adverse effect on the hardness and tensile yield strength in the post-braze condition.

From a comparison of properties of Alloy no.1 after natural ageing and after artificial ageing it can be seen that artificial ageing leads to significant higher hardness and tensile properties that natural ageing. The same effect can be seen for Alloy no. 2.

From the comparison of Alloys no. 1 and 2 after artificial ageing it can be seen that the homogenized material has slightly higher hardness and tensile properties than the non-homogenised material. This effect is more pronounced for Alloy no. 2 than for Alloy no. 1. In practice this small increase in hardness has to be balanced against the addition process costs of a homogenisation step.

Alloy 2 combines the highest post-braze hardness with the highest post-braze tensile yield strength, both after natural ageing and after artificial ageing, and is preferred over Alloy no. 1.

In this example the effective use of the waterside liner material has been demonstrated on bare 0.3 mm material. It will be evident for the skilled person that the same advantages are being obtained when the waterside liner material is bonded to an aluminium core alloy to form part of a brazing sheet product.

Having now fully described the invention, it will be apparent to one of ordinary skill in the art that many changes and modifications can be made without departing from the spirit or scope of the invention as herein described.

## Claims

1. A brazing sheet material comprising of an aluminium core alloy layer bonded on one side with an aluminium brazing clad layer and bonded on the other side with a waterside liner, and wherein the waterside liner is being made of an aluminium alloy having a corrosion potential lower than that of said aluminium core alloy, and the waterside liner is from an aluminium alloy comprising of, in wt.%,
| | |
|---|---|
| Zn | 0.8 to 3 |
| Mg | 0.2 to 1.25 |
| Mn | less than 0.9 |
| Cu | less than 0.3, |
| optionally one or more elements selected from the group consisting of (Zr 0.05 to 0.3, Cr 0.05 to 0.3, V 0.05 to 0.3, Ti 0.01 to 0.4), | |
| Fe | less than 0.6 |
| Si | less than 0.5, |
other elements and unavoidable impurities (each maximum 0.05%, total 0.2%) and balance aluminium.

2. A brazing sheet material according to claim 1, wherein the waterside liner has a Mn-content of less than 0.7%, and preferably of less than 0.4%.

3. A brazing sheet material according to claim 1 or 2, wherein the waterside liner has a Cu-content of less than 0.1 %, and more preferably less than 0.03%.

4. A brazing sheet material according to any one of claims 1 to 3, wherein the waterside liner has a Zn-content less than 2.5%, and preferably of at least 1.5%.

5. A brazing sheet material according to any one of claims 1 to 4, wherein the waterside liner has a Mg-content of at least 0.45%.

6. A brazing sheet material according to any one of claims 1 to 5, wherein the aluminium brazing clad liner comprises 7% to 14% Si.

7. A brazing sheet material according to any one of claims 1 to 6, wherein the aluminium brazing clad liner comprises 7% to 14% Si, and 0.02% to 0.5% Mg, and 0.01 % to 0.5% Bi.

8. A brazing sheet material according to any one of claims 1 to 7, wherein the waterside liner is non-homogenized.

9. A brazing sheet product according to any one of claims 1 to 8, wherein the brazing sheet product is used in a heat exchanger.

10. A brazing sheet product according to any one of claims 1 to 9, wherein the brazing sheet product is used in a folded tube in a heat exchanger and wherein the waterside liner forms the innersurface of the tube.

11. A brazing sheet product according to any one of claims 1 to 10, wherein the waterside liner is age-hardenable after exposure to a brazing cycle.

12. A brazing sheet product according to any one of claims 1 to 11, wherein the waterside liner has a post-braze hardness of greater than 50 Hv, and preferably of at least 60 Hv.

13. A brazing sheet product according to any one of claims 1 to 12, wherein the waterside liner has a post-braze yield strength of greater than 110 MPa, and preferably of at least 130 MPa.

14. A method of manufacturing an article joined by brazing or an assembly of brazed components, comprising the steps of:
(a) forming the components of which at least one is made from an aluminium brazing sheet material according to any one of claims 1 to 10,
(b) assembling the components into an assembly, and wherein preferably the waterside liner material of the brazing sheet material is being kept inside the assembly formed by the brazing sheet material to constitute a hollow structure,
(c) brazing the assembly without applying brazing flux on the assembly of components and brazing the whole assembly in an inert gas atmosphere at a brazing temperature to form a brazed assembly, and
(d) cooling of the brazed assembly, typically to below about 100°C.

15. A method according to claim 14, wherein the brazed and cooled assembly of components is subjected to an artificial ageing heat-treatment.
